(19) Europäisches Patentamt
European Patent Office
Office européen des brevets

(11) Veröffentlichungsnummer : **0 205 503**
**B1**

(12) **EUROPÄISCHE PATENTSCHRIFT**

(45) Veröffentlichungstag der Patentschrift : **15.03.89**

(51) Int. Cl.$^4$ : **C 09 K 19/42**, C 09 K 19/34, C 09 K 19/30, C 09 K 19/20, C 09 K 19/12

(21) Anmeldenummer : **86900068.7**

(22) Anmeldetag : **20.12.85**

(86) Internationale Anmeldenummer : **PCT/DE 85/00550**

(87) Internationale Veröffentlichungsnummer : **WO/8603769 (03.07.86 Gazette 86/14)**

(54) **FLÜSSIGKRISTALLINE PHASE.**

(30) Priorität : **24.12.84 DE 3447359**

(43) Veröffentlichungstag der Anmeldung : **30.12.86 Patentblatt 86/52**

(45) Bekanntmachung des Hinweises auf die Patenterteilung : **15.03.89 Patentblatt 89/11**

(84) Benannte Vertragsstaaten : **CH DE FR GB LI**

(56) Entgegenhaltungen :
**EP-A- 0 107 759**
**US-A- 4 490 276**

(73) Patentinhaber : **MERCK PATENT GESELLSCHAFT MIT BESCHRÄNKTER HAFTUNG**
**Frankfurter Strasse 250 Postfach 4119**
**D-6100 Darmstadt (DE)**

(72) Erfinder : **SCHEUBLE, Bernhard**
**Am Grenzweg 18**
**D-6146 Alsbach (DE)**
Erfinder : **WEBER, Georg**
**Wilhelm-Leuschner-Strasse 38**
**D-6106 Erzhausen (DE)**
Erfinder : **HITTICH, Reinhard**
**Am Kirchberg 11**
**D-6101 Modautal 1 (DE)**
Erfinder : **WÄCHTLER, Andreas**
**Goethestrasse 34**
**D-6103 Griesheim (DE)**

**EP 0 205 503 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft flüssigkristalline Phasen (FK-Phasen) mit besonders niedriger Schwellenspannung und breiten nematischen Phasen.

Für Flüssigkristall-Anzeigeelemente (FK-Anzeigeelemente) werden in zunehmendem Maße die Eigenschaften nematischer oder nematisch-cholesterischer flüssigkristalliner Materialien ausgenutzt, ihre optischen Eigenschaften wie Lichtabsorption, Lichtstreuung, Doppelbrechung, Reflexionsvermögen oder Farbe unter dem Einfluß elektrischer Felder signifikant zu verändern. Die Funktion derartiger Anzeigeelemente beruht dabei beispielsweise auf den Phänomenen der dynamischen Streuung, der Deformation aufgerichteter Phasen, dem Guest-Host-Effekt, dem Schadt-Helfrich-Effekt in der verdrillten Zelle oder dem cholesterisch-nematischen Phasenübergang.

Für die technische Anwendung dieser Effekte in elektronischen Bauelementen werden flüssigkristalline Phasen benötigt, die einer Vielzahl von Anforderungen genügen müssen. Besonders wichtig sind hier die chemische Beständigkeit gegenüber Feuchtigkeit, Luft und Physikalischen Einflüssen wie Wärme, Strahlung im infraroten, sichtbaren und ultravioletten Bereich und elektrische Gleich- und Wechselfelder. Ferner wird von technisch verwendbaren flüssigkristallinen Phasen eine flüssigkristalline Mesophase in einem geeigneten Temperaturbereich, eine möglichst niedrige Viskosität, eine relativ niedrige optische Anisotropie, eine hohe Steilheit der elektrooptischen Kennlinie und ein ausreichendes Lösungsvermögen für pleochroitische Farbstoffe gefordert. Schließlich dürfen sie im Bereich des sichtbaren Lichtes keine Eigenabsorption aufweisen, d. h. sie müssen farblos sein.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis fünfundzwanzig, vorzugsweise drei bis fünfzehn, Verbindungen hergestellt, um als flüssigkristalline Phasen verwendbare Substanzen zu erhalten. Hierzu mischt man gewöhnlich mindestens eine Verbindung mit niedrigem Schmelz- und Klärpunkt. Hierbei wird normalerweise ein Gemisch erhalten, dessen Schmelzpunkt unter dem der niedriger schmelzenden Komponente liegt, während der Klärpunkt zwischen den Klärpunkten der Komponenten liegt. Optimale Phasen lassen sich jedoch auf diese Weise nicht leicht herstellen, da die Komponenten mit den hohen Schmelz- und Klärpunkten den Gemischen häufig auch eine hohe Viskosität verleihen. Dadurch werden die Schaltzeiten der damit hergestellten elektrooptischen Anzeigeelemente in unerwünschter Weise verändert.

In der EP-A 0 107 759 werden flüssigkristalline Dielektrika beschrieben, die neben Dioxanverbindungen (wie z. B. Phenyldioxanen) Cyclohexanderivate mit einer in 1- und/oder 4-Stellung axial substituierten 1,4-Cyclohexylengruppe enthalten. Optimale Phasen mit niedriger Schwellenspannung lassen sich jedoch auf diese Weise nicht herstellen.

Zur Verminderung der Schwellenspannung werden in bisher bekannten FK-Phasen stark polare nematische Verbindungen mit terminaler Cyan-Gruppe zugesetzt.

Das effektive Dipolmoment dieser Verbindungen wird jedoch durch eine mehr oder weniger starke antiparallele Assoziation dieser Moleküle deutlich vermindert, so daß relativ große Anteile polarer Verbindungen zugesetzt werden müssen. Hieraus resultieren wieder verschiedene Nachteile, wie ungünstige elastische Eigenschaften der FK-Phasen, hohe Viskosität. Beim Zusatz von p-Alkylbenzoesäure-4-cyan-3-fluorphenylestern als stark polare Komponenten zu ZLI-1957/5 (im Handel befindliche Mischung von E. Merck, Darmstadt, enthaltend Phenylcyclohexan-, Cyclohexylbiphenyl-, Bis-cyclohexylbiphenylverbindungen und Cyclohexylbenzoesäurephenylester) konnte gezeigt werden (Hp. Schad and S. M. Kelly, J. Chem. Phys. 81 (3), 1514-15 (1984), daß die Schwellenspannung vermindert wird, was durch einen reduzierten Assoziationsgrad der zugesetzten Verbindungen erklärt wird. Jedoch auch diese FK-Phasen genügen nicht gleichzeitig allen oben angegebenen Erfordernissen. Insbesondere weise sie für viele Anwendungen nach wie vor zu hohe Schwellenspannungen auf und außerdem sind die Kennliniensteilheiten aufgrund des verhältnismäßig großen Verhältnisses der elastischen Konstanten für die Biegung ($K_3$) und die Spreizung ($K_1$) $K_3/K_1$ für hochinformative Displays nicht ausreichend. Die bisher bekannten Mischungen sind daher mit einer zu hohen Schwellenspannung und/oder einer zu schlechten Kennliniensteilheit (gekennzeichnet durch ein zu hohes $K_3/K_1$) behaftet.

Es besteht somit immer noch ein großer Bedarf nach flüssigkristallinen Phasen mit hohen Klärpunkten, niederen Schmelzpunkten, niedriger Viskosität (und damit kurzen Schaltzeiten) und niedriger Schwellenspannung, die gleichzeitig günstige elastische Eigenschaften aufweisen.

Der Erfindung liegt die Aufgabe zugrunde, flüssigkristalline Phasen herzustellen, die eine nematische Phase im geforderten Temperaturbereich aufweisen und die oben angegebenen Nachteile nicht oder nur in geringerem Maße aufweisen.

Es wurde nun gefunden, daß Flüssigkristallphasen mit besonders günstigen Kombinationen von Materialeigenschaften, insbesondere breiten Mesophasenbereichen, außergewöhnlich niedriger Schwellenspannung und günstigen elastischen Eigenschaften erhalten werden, wenn sie mindestens eine Komponente der Formel I

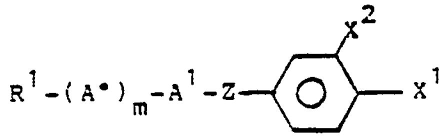 (I)

worin

$R^1$ Alkyl mit 1 bis 12 C-Atomen, worin auch eine oder zwei nicht benachbarte $CH_2$-Gruppen durch O-Atome, —CO—, —O—CO—, —CO—O— und/oder —CH=CH-Gruppen ersetzt sein können,

$A^0$ und $A^1$ jeweils unabhängig voneinander Cy, Dio, Pyr oder Phe,

Z —CO—O—, —O—CO—, —$CH_2$—O—, —O—$CH_2$— oder eine Einfachbindung,

$X^1$ F, Cl, —CN oder —NCS,

$X^2$ F, Cl und im Falle $X^1$ = NCS auch H,

m 0 oder 1,

Cy trans-1,4-Cyclohexylen,

Pyr Pyrimidin-2,5-diyl oder Pyridin-2,5-diyl,

Dio trans-1,3-Dioxan-2,5-diyl und

Phe 1,4-Phenylen bedeutet,

und mindestens eine Komponente der Formel II enthält

$$R^2\text{-Dio-}A^2\text{-}(Z\text{-}A^3)_n\text{-}R^3 \qquad II$$

worin

$R^2$ Alkyl mit 1 bis 12 C-Atomen, worin auch eine oder zwei nicht benachbarte $CH_2$-Gruppen durch O-Atome, —CO—, —O—CO—, —OO—O— und —CH=CH-Gruppen ersetzt sein können,

$R^3$ Alkyl mit 1 bis 12 C-Atomen, worin auch eine oder zwei nicht benachbarte $CH_2$-Gruppen durch O-Atome, —CO—, —O—CO—, —CO—O— und/oder —CH=CH-Gruppen ersetzt sein können, F, Cl oder CN,

$A^2$ und $A^3$ jeweils Phe oder Cy,

n 0, 1 oder 2 bedeutet, und

Z, Dio, Phe und Cy die angegebenen Bedeutungen haben, enthalten.

Gegenstand der Erfindung sind somit die oben beschriebenen Flüssigkristallphasen, die gegebenenfalls auch einen oder mehrere pleochroitische Farbstoffe enthalten können (Guest-Host-Systeme), sowie die Verwendung dieser Phasen in Flüssigkristallanzeigeelementen.

Ferner sind Gegenstand der Erfindung Flüssigkristallanzeigeelemente, insbesondere elektrooptische Anzeigeelemente, die solche Phasen enthalten.

Die erfindungsgemäßen Guest-Host-Systeme enthalten in der Regel 0,1 bis 15, vorzugsweise 0,5 bis 10, insbesondere 1 bis 7 Gewichtsprozent pleochroitische Farbstoffe.

Vorzugsweise werden die pleochroitischen Farbstoffe des erfindungsgemäßen Guest-Host-Systems so gewählt, daß sie einen geeigneten Teil des sichtbaren Spektrums abdecken und daß die Absorption in diesem Bereich mehr oder weniger konstant ist.

Die Herstellung der erfindungsgemäßen Guest-Host-Systeme erfolgt in an sich üblicher Weise. In der Regel werden die gewünschten Mengen der verschiedenen pleochroitischen Farbstoff im Host-Material gelöst, zweckmäßig bei erhöhter Temperatur.

Es ist jedoch auch möglich, Lösungen des pleochroitischen Farbstoffes und des Host-Materials in einem geeigneten organischen Lösungsmittel, zum Beispiel Aceton, Chloroform oder Methanol, zu mischen und das Lösungsmittel nach gründlicher Durchmischung wieder zu entfernen, beispielsweise durch Destillation unter vermindertem Druck. Selbstverständlich muß bei dieser Verfahrensweise darauf geachtet werden, daß durch das Lösungsmittel keine Verunreinigungen oder unerwünschten Dotierungsstoffe eingeschleppt werden.

Die einzelnen Verbindungen der Formel I und II der erfindungsgemäßen Flüssigkristallphasen sind entweder bekannt oder ihre Herstellungsweisen sind für den einschlägigen Fachmann aus dem Stand der Technik ohne weiteres abzuleiten, da sie auf in der Literatur beschriebenen Standardverfahren basieren.

Entsprechende Verbindungen der Formel I werden beispielsweise beschrieben in den deutschen Patentanmeldungen P 34 05 914 und P 35 15 633 ; in der europäischen Patentschrift EP-PS 0 019 665 ; in S. M. Kelly and Hp. Schad, Helvetica Chimica Acta, 67, 1580-1587 (1984) ; in S. M. Kelly, ebenda, 67, 1572-1579 (1984) ; in der japanischen OS 59-191 789 sowie in den europäischen Offenlegungsschriften EP-OS 0 099 099 und EP-OS 0 119 756. Verbindungen der Formel II sind beispielsweise beschrieben in den deutschen Offenlegungsschriften DE-OS 29 44 905, DE-OS 31 12 185, DE-OS 31 46 249, DE-OS 31 50 761, DE-OS 31 50 763, DE-OS 32 07 114, DE-OS 32 27 916, DE-OS 33 02 218, DE-OS 33 34 054, in Europäischen Offenlegungsschrift EP-OS 0 122 389, im US-Patent 4 322 354 sowie in der japanischen Offenlegungsschrift JP-56-164 179.

Überraschenderweise zeigt sich, daß die erfindungsgemäße Kombination von Verbindungen der Formeln I und II FK-Phasen ergibt, die zum einen breite Mesophasenbereiche mit niederen Schmelzpunkten und niederen smektisch-nematischen Übergangstemperaturen aufweisen, als auch bei außergewöhnlich niederen Schwellenspannungen durch günstige Verhältnisse der elastischen Konstanten für die Biegung ($K_3$) und die Spreizung ($K_1$) gekennzeichnet sind.

Vorzugsweise enthalten die erfindungsgemäßen FK-Phasen mindestens zwei Komponenten, insbesondere mindestens drei Komponenten, der Formel I und mindestens zwei Komponenten, insbesondere mindestens vier Komponenten der Formel II.

Der Gesamtanteil der Verbindungen der Formeln I und II in den erfindungsgemäßen FK-Phasen beträgt vorzugsweise mehr als 50 %, insbesondere mehr als 58 %. Besonders bevorzugt sind erfindungsgemäße FK-Phasen mit einem Gesamtanteil der Verbindungen der Formeln I und II von 80 bis 100 %.

Der Anteil der Verbindungen der Formel I ist vorzugsweise 13 bis 79 %, besonders bevorzugt 18 bis 55 %. Der Anteil der Verbindungen der Formel II ist vorzugsweise 29 bis 69 %, besonders bevorzugt 32 bis 59 %.

Als weitere Komponenten der erfindungsgemäßen FK-Phasen neben den Verbindungen der Formeln I und II kommen Verbindungen der Formel III

$$R^1\text{-}(Cy)_r\text{-}(Phe)_s\text{-}Z^1\text{-}Phe\text{-}CN \qquad III$$

worin

r 0, 1 oder 2,
s 0 oder 1,
r + s 1 oder 2,
$Z^1$ —CO—O— oder eine Einfachbindung

bedeutet, und $R^1$, Cy und Phe die angegebenen Bedeutungen haben und/oder Verbindungen der Formel IV

$$R^1\text{-}(Cy)_r\text{-}Z^2\text{-}(Phe)_t\text{-}Z^3\text{-}(Cy)_s\text{-}R^2 \qquad IV$$

worin

t 0, 1 oder 2,
r + s + t 2, 3 oder 4,
$Z^2$ und $Z^3$ jeweils —CO—O—, —O—CO—, —$CH_2CH_2$— oder eine Einfachbindung

bedeuten, und $R^1$, $R^2$, Cy, Phe, r und s die angegebenen Bedeutungen haben, in Betracht. Vorzugsweise enthalten die erfindungsgemäßen Phasen mindestens eine Verbindung der Formel III oder IV. Besonders bevorzugt sind FK-Phasen, die gleichzeitig jeweils mindestens eine Verbindung der Formel III und IV enthalten.

Bevorzugte Verbindungen der Formel I sind diejenigen der Teilformeln Ia bis Is :

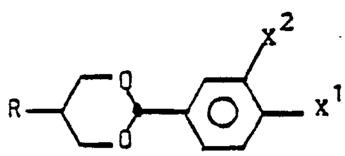

Ia

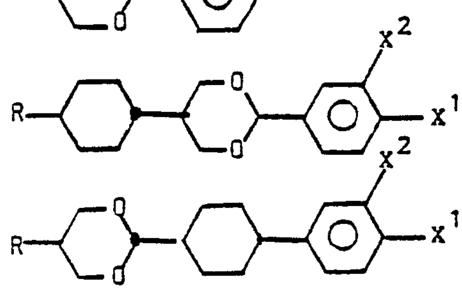

Ib

Ic

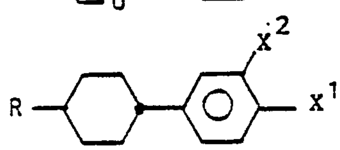

Id

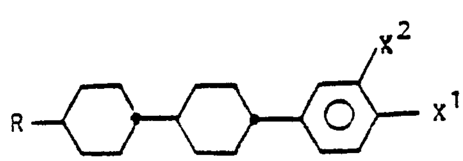

Ie

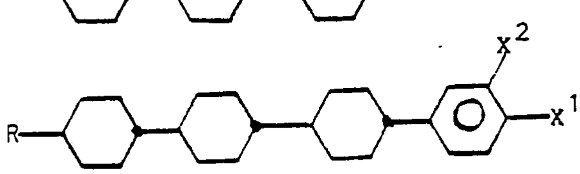

If

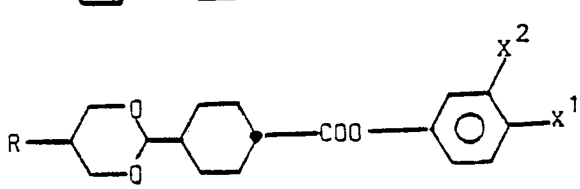

Ig

(Fortsetzung)

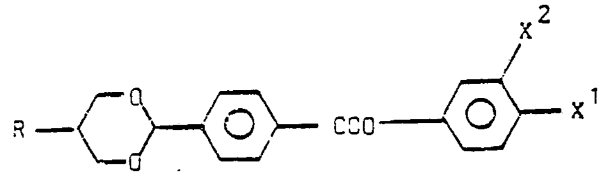
Ih

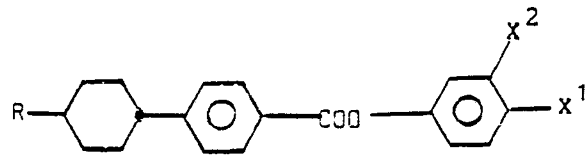
Ii

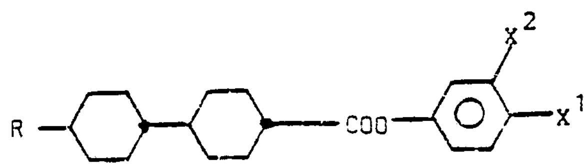
Ij

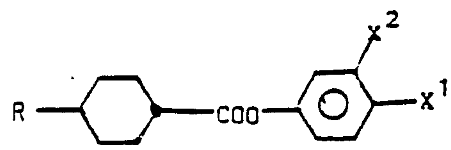
Ik

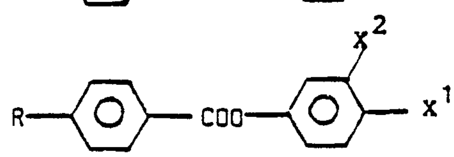
Il

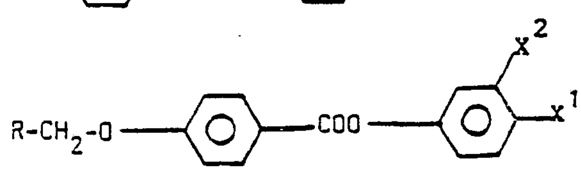
Im

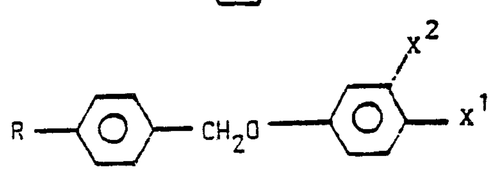
In

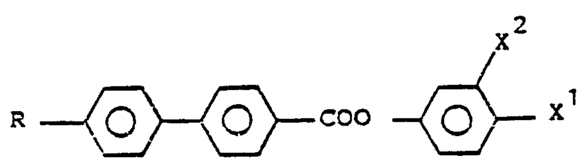
Io

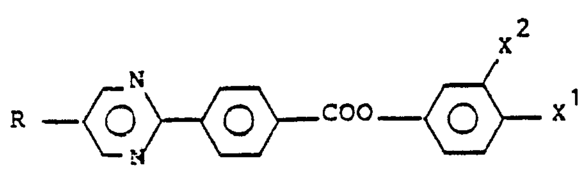
Ip

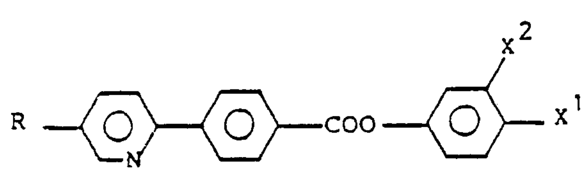
Iq

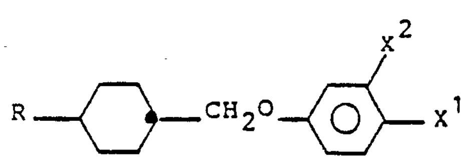
Ir

(Fortsetzung)

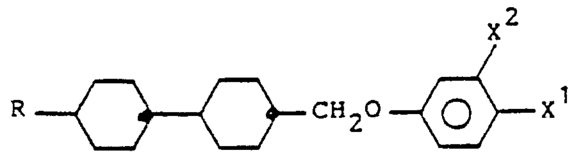 Is

die Gruppe 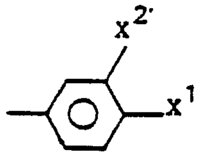 bedeutet vorzugsweise

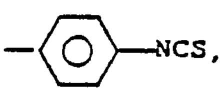, 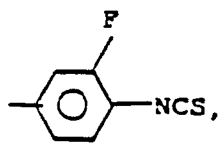, 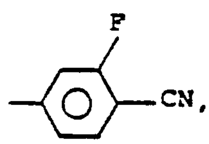,

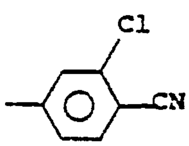 oder 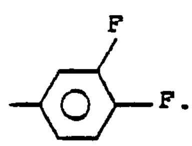.

$R^1$ ist vorzugsweise geradkettiges Alkyl mit 2 bis 7 C-Atomen. Z ist bei Verbindungen der Formel I vorzugsweise —CO—O—, —$CH_2$—O— oder eine Einfachbindung. $X^2$ ist vorzugsweise Fluor.

Unter den vorstehenden Teilformeln sind diejenigen der Formeln Ia, Ib, Ic, Id, Ie, Ig, Ih, Ii, Ij, Ik, Il, Im, Io, Ip, Ir und Is bevorzugt. Besonders bevorzugt sind diejenigen der Teilformeln Ia-Ic, Ig, Ih, Im und Ip.

Bevorzugte Verbindungen der Formel II sind diejenigen der Teilformeln IIa bis IIac :

| | |
|---|---|
| R-Dio-Phe-CN | IIa |
| R-Dio-Phe-R | IIb |
| R-Dio-Phe-$OCH_2R$ | IIc |
| R-Dio-Phe-$OCOCH_2R$ | IId |
| R-Dio-Cy-R | IIe |
| R-Dio-Cy-$OCH_2R$ | IIf |
| R-Dio-Cy-CN | IIg |
| R-Dio-Cy-$COOCH_2R$ | IIh |
| $RCH_2O$-Dio-Cy-R | IIi |
| R-Dio-Cy-COO-Cy-R | IIj |
| R-Dio-Phe-COO-Phe-CN | IIk |
| R-Dio-Phe-COO-Phe-R | IIl |
| R-Dio-Phe-COO-Phe-$OCH_2R$ | IIm |
| R-Dio-Phe-COO-Cy-R | IIn |
| R-Dio-Cy-COO-Phe-CN | IIo |
| R-Dio-Phe-Cy-R | IIp |
| R-Dio-Cy-Cy-R | IIq |
| R-Dio-Phe-Phe-Cy-R | IIr |
| R-Dio-Cy-Phe-CN | IIs |
| R-Dio-Cy-Phe-R | IIt |
| R-Dio-Cy-Phe-$OCH_2R$ | IIu |
| R-Phe-OCO-Dio-R | IIv |
| R-$CH_2O$-Phe-OCO-Dio-R | IIw |
| NC-Phe-OCO-Dio-R | IIx |
| NC-Phe-OCO-Dio-Phe-R | IIy |
| NC-Phe-OCO-Dio-Phe-$OCH_2R$ | IIz |
| R-Cy-OCO-Dio-R | IIaa |
| R-Cy-Cy-OCO-Dio-R | IIab |
| R-Cy-Ph-OCO-Dio-R | IIac |

Unter den vorstehenden Teilformeln sind diejenigen der Formeln IIa, IIb, IIc, IId, IIe, IIf, IIg, IIj, IIk, III, IIm und IIr bevorzugt. Besonders bevorzugt sind diejenigen der Teilformeln IIa, IIb, IIc, IId, IIe, IIf, IIg und III.

n ist vorzugsweise 0 oder 1.

Z ist bei Verbindungen der Formel II vorzugsweise ein Einfachbindung. $R^2$ ist vorzugsweise geradkettiges Alkyl mit 2 bis 7 C-Atomen. $R^3$ ist vorzugsweise geradkettiges Alkyl oder Alkoxy mit jeweils 2 bis 7 C-Atomen, F, Cl oder CN, insbesondere bevorzugt CN.

Bevorzugte Verbindungen der Formel III sind diejenigen der Teilformeln IIIa bis IIIh :

| | |
|---|---|
| R-Phe-Phe-CN | IIIa |
| $RCH_2O$-Phe-Phe-CN | IIIb |
| R-Cy-Phe-CN | IIIc |
| R-Cy-Phe-Phe-CN | IIId |
| R-Cy-Cy-Phe-CN | IIIe |
| R-Phe-COO-Phe-CN | IIIf |
| R-Cy-COO-Phe-CN | IIIg |
| R-Cy-Phe-COO-Phe-CN | IIIh |

Bevorzugte Verbindungen der Formel IV sind diejenigen der Teilformeln IVa bis IVj :

| | |
|---|---|
| R-Cy-Ph-R | IVa |
| R-Cy-Ph-$OCH_2R$ | IVb |
| R-Cy-Ph-Ph-R | IVc |
| R-Cy-Ph-Ph-$OCH_2R$ | IVd |
| R-Cy-Ph$\overset{F}{+}$Ph-R | IVe |
| R-Cy-Ph-Ph-Cy-R | IVf |
| R-Cy-Ph$\overset{F}{+}$Ph-Cy-R | IVg |
| R-Cy-Cy-COO-Cy-R | IVh |
| R-Cy-Cy-$CH_2CH_2$-Cy-R | IVi |
| R-Cy-Ph-Ph-$CH_2CH_2$-Cy-R | IVj |

Unter den vorstehenden Teilformeln sind diejenigen der Formeln IVb, IVe, IVf, IVg, IVh und IVi bevorzugt. Besonders bevorzugt sind diejenigen der Teilformeln IVe, IVf, IVg, IVh und IVi.

Bei den Verbindungen der vorstehenden Teilformeln bedeutet R eine geradkettige Alkylgruppe vorzugsweise mit 1 bis 7 C-Atomen, worin auch eine $CH_2$-Gruppe durch —O— oder —CH=CH— ersetzt sein kann. Besonders bevorzugte Gruppen R sind Methyl, Ethyl, n-Propyl, n-Butyl, n-Pentyl und n-Heptyl.

Bei Verbindungen der vorstehenden Teilformeln mit zwei Gruppen R haben beide Gruppen R jeweils unabhängig voneinander eine der vorstehend genannten Bedeutungen.

Wenn die Alkylgruppen 3 oder mehr Kohlenstoffatome enthalten, können diese in gerader oder verzweigter Kette angeordnet sein. In den erfindungsgemäßen Phasen werden jedoch keine Komponenten verwendet, die mehr als eine verzweigte Alkylgruppe enthalten. Derartige verzweigte Alkylgruppen enthalten im Rahmen der vorliegenden Erfindung nicht mehr als eine Kettenverzweigung ; vorzugsweise handelt es sich dabei um eine Methyl- oder Ethylgruppe in 1- oder 2-Stellung des Kohlenstoffgerustes, so daß als verzweigte Alkylgruppen insbesondere in Frage kommen : 2-Methylpropyl, 2-Methylbutyl, 1-Methylpentyl, 2-Methylpentyl, 1-Methylhexyl. In der Regel enthalten die erfindungsgemäßen flüssigkristallinen Dielektrika nur eine Komponente mit einem verzweigtkettigen Alkylrest, um gewünschtenfalls optische Aktivität zu induzieren. Zu diesem Zweck werden normalerweise nicht mehr als 10 Gewichtsprozent, vorzugsweise 0,5 bis 3 Gewichtsprozent einer Komponente mit einem verzweigten Alkylrest zugefügt.

Bei den Verbindungen der vorstehenden Teilformeln bedeutet

—Phe$\overset{F}{+}$Phe—

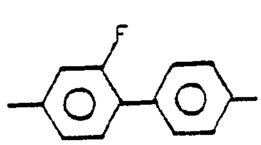

oder

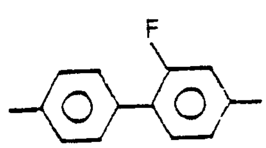

Die erfindungsgemäßen FK-Phasen enthalten vorzugsweise nicht gleichzeitig Verbindungen der Formeln III und IV.

Bevorzugte erfindungsgemäße Phasen enthalten Verbindungen der Formel II, worin $R^2$ n-Alkyl und $R^3$ n-Alkyl, n-Alkoxy oder n-Alkanoyloxy bedeutet und/oder Verbindungen der Formel I, worin $A^1$ Dio

bedeutet. $R^1$ und $R^2$ sind vorzugsweise n-Alkyl oder n-Alkoxy mit jeweils 2 bis 7 C-Atomen. $R^3$ ist vorzugsweise n-Alkyl, n-Alkoxy, n-Alkanoyloxy mit jeweils 2 bis 7 C-Atomen oder CN. Besonders bevorzugt ist $R^2$ n-Alkyl und $R^3$ n-Alkoxy.

Die Herstellung der erfindungsgemäßen Phasen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Wenn dabei eine Temperatur oberhalb des Klärpunkts des Hauptbestandteils gewählt wird, kann die Vollständigkeit des Lösevorgangs besonders leicht beobachtet werden.

Es ist jedoch auch möglich, Lösungen der Komponenten in einem geeigneten organischen Lösungsmittel, zum Beispiel Aceton, Chloroform oder Methanol, zu mischen und das Lösungsmittel nach gründlicher Durchmischung wieder zu entfernen, beispielsweise durch Destillation unter vermindertem Druck. Selbstverständlich muß bei dieser Verfahrensweise darauf geachtet werden, daß durch das Lösungsmittel keine Verunreinigungen oder unerwünschten Dotierungsstoffe eingeschleppt werden.

Durch geeignete Zusätze können die flüssigkristallinen Phasen nach der Erfindung so modifiziert werden, daß sie in allen bisher bekannt gewordenen Arten von Flüssigkristallanzeigeelementen verwendet werden können.

Derartige Zusätze sind dem Fachmann bekannt und in der Literatur ausführlich beschrieben. Beispielsweise können Leitsalze, vorzugsweise Ethyl-dimethyldodecylammonium-4-hexyloxybenzoat, Tetrabutylammonium-tetraphenylboronat oder Komplexsalze von Kronenethern (vgl. z. B. I. Haller et al., Mol. Cryst. Liq. Cryst. Band 24, Seiten 249-258, (1973)) zur Verbesserung der Leitfähigkeit oder Substanzen zur Veränderung der dielektrischen Anisotropie, der Viskosität und/oder der Orientierung der nematischen Phasen zugesetzt werden. Derartige Substanzen sind z. B. in den DE-OS 22 09 127, 22 40 864, 23 21 632, 23 38 281, 24 50 088, 26 37 430, 28 53 728 und 29 02 177 beschrieben.

Die folgenden Beispiele sollen die Erfindung erläutern. In den Beispielen sind Schmelzpunkt und Klärpunkt einer flüssigkristallinen Substanz in Grad Celsius angegeben. Die Prozentzahlen beziehen sich auf Gewichtsprozente. Die Werte der Schwellenspannungen beziehen sich auf einen Beobachtungswinkel von 0°, 10 % Kontrast und 20 °C.

### Beispiel 1

Eine Flüssigkristallphase, bestehend aus

7 % trans, trans-4-Butylcyclohexyl-cyclohexan-4'-carbonsäure-trans-4-propylcyclohexylester,
7 % trans, trans-4-Butylcyclohexyl-cyclohexan-4'-carbonsäure-trans-4-pentylcyclohexylester,
7 % trans, trans-4-Propylcyclohexyl-cyclohexan-4'-carbonsäure-trans-4-propylcyclohexylester,
7 % trans, trans-4-Propylcyclohexyl-cyclohexan-4'-carbonsäure-trans-4-pentylcyclohexylester,
19 % trans-4-(trans-5-Propyl-1,3-dioxan-2-yl)-cyclohexancarbonitril,
20 % trans-4-(trans-5-Butyl-1,3-dioxan-2-yl)-cyclohexancarbonitril,
17 % trans-4-(trans-5-Pentyl-1,3-dioxan-2-yl)-cyclohexancarbonitril,
7 % p-Ethylbenzoesäure-(4-cyan-3-fluorphenylester) und
9 % p-Propylbenzoesäure-(4-cyan-3-fluorphenylester)

hat eine Schwellenspannung von 1,2 Volt.

### Beispiel 2

Eine FK-Phase, bestehend aus

12 % trans-4-(trans-5-Propyl-1,3-dioxan-2-yl)-cyclohexancarbonitril,
12 % trans-4-(trans-5-Pentyl-1,3-dioxan-2-yl)-cyclohexancarbonitril,
22 % trans-4-(trans-5-Ethyl-1,3-dioxan-2-yl)-1-pentylcyclohexan,
23 % trans-4-(trans-5-Propyl-1,3-dioxan-2-yl)-1-propylcyclohexan,
6 % 4,4'-Bis-(trans-4-propylcyclohexyl)-2-fluor-biphenyl,
6 % 4,4'-Bis-(trans-4-pentylcyclohexyl)-2-fluor-biphenyl,
6 % 4-(trans-4-Pentylcyclohexyl)-4'-(trans-4-propylcyclohexyl)-2-fluor-biphenyl,
6 % p-Ethylbenzoesäure-(4-cyan-3-fluorphenylester) und
7 % p-Propylbenzoesäure-(4-cyan-3-fluorphenylester

hat eine Schwellenspannung von 1,3 Volt.

### Beispiel 3

Eine FK-Phase, bestehend aus

7 % 4,4'-Bis-(trans-4-propylcyclohexyl)-2-fluor-biphenyl,

7 % 4,4'-Bis-(trans-4-pentylcyclohexyl)-2-fluor-biphenyl,
7 % 4-(trans-4-Pentylcyclohexyl)-4'-(trans-4-propyl-cyclohexyl)-2-fluor-biphenyl,
10 % 4-Ethyl-2'-fluor-4'-(trans-4-pentylcyclohexyl)-biphenyl,
18 % trans-4-(trans-5-Propyl-1,3-dioxan-2-yl)-1-ethoxy-cyclohexan,
18 % trans-4-(trans-5-Propyl-1,3-dioxan-2-yl)-1-butoxy-cyclohexan,
7 % 2-p-Butyryloxyphenyl-5-propyl-1,3-dioxan,
12 % 2-p-Butyryloxyphenyl-5-pentyl-1,3-dioxan,
5 % p-(trans-4-Propylcyclohexylbenzoesäure-(4-cyan-3-fluorphenylester),
4 % p-Ethylbenzoesäure-(4-cyan-3-fluorphenylester) und
5 % p-Propylbenzoesäure-(4-cyan-3-fluorphenylester

hat einen Schmelzpunkt von —11° und einen Klärpunkt von 85°.

Beispiel 4

Eine FK-Phase, bestehend aus

12 % p-(trans-5-Propyl-1,3-dioxan-2-yl)-benzoesäure-(p-propylphenylester),
10 % p-(trans-5-Propyl-1,3-dioxan-2-yl)-benzoesäure-(p-pentylphenylester),
12 % p-(trans-5-Pentyl-1,3-dioxan-2-yl)-benzoesäure-(p-pentylphenylester),
11 % p-(trans-5-Pentyl-1,3-dioxan-2-yl)-benzoesäure-(p-propylphenylester),
6 % p-Ethylbenzoesäure-(4-cyan-3-fluorphenylester),
8 % p-Propylbenzoesäure-(4-cyan-3-fluorphenylester),
9 % p-Butylbenzoesäure-(4-cyan-3-fluorphenylester),
12 % p-Pentylbenzoesäure-(4-cyan-3-fluorphenylester),
11 % p-Hexylbenzoesäure-(4-cyan-3-fluorphenylester) und
9 % p-Heptylbenzoesäure-(4-cyan-3-fluorphenylester)

hat eine Schwellenspannung von 1,3 Volt.

Beispiel 5

Eine FK-Phase, bestehend aus

11 % 2-p-Ethoxyphenyl-5-propyl-1,3-dioxan,
7 % 2-p-Butoxyphenyl-5-propyl-1,3-dioxan,
8 % 2-p-Butoxyphenyl-5-pentyl-1,3-dioxan,
5 % 2-p-Hexylphenyl-5-propyl-1,3-dioxan,
9 % 2-p-Hexylphenyl-5-pentyl-1,3-dioxan,
7 % 4,4'-Bis-(trans-4-propylcyclohexyl)-2-fluor-biphenyl,
7 % 4,4'-Bis-(trans-4-pentylcyclohexyl)-2-fluor-biphenyl
7 % 4-(trans-4-Pentylcyclohexyl)-4'-(trans-4-propylcyclohexyl)-2-fluor-biphenyl,
11 % trans-4-(trans-5-Propyl-1,3-dioxan-2-yl)-cyclohexancarbonsäurepropylester,
7 % p-Ethylbenzoesäure-(4-cyan-3-fluorphenylester),
9 % p-Propylbenzoesäure-(4-cyan-3-fluorphenylester) und
12 % p-Pentylbenzoesäure-(4-cyan-3-fluorphenylester)

hat eine Schwellenspannung von 1,4 Volt.

Beispiel 6

Eine FK-Phase, bestehend aus

13 % 2-p-Cyanphenyl-5-propyl-1,3-dioxan,
19 % 2-p-Cyanphenyl-5-butyl-1,3-dioxan,
13 % 4-Ethyl-4'-cyanbiphenyl,
22 % 4-Butyl-4'-cyanbiphenyl,
8 % 4-Cyan-4'-(trans-4-pentylcyclohexyl)-biphenyl,
3 % p-(trans-4-Ethylcychohexyl)-benzoesäure-(p-cyanphenylester),
4 % p-(trans-4-Pentylcyclohexyl)-benzoesäure-(p-cyanphenylester),
8 % p-(trans-4-Propylcyclohexyl)-benzoesäure-(4-cyan-3-fluorphenylester),
5 % p-Ethylbenzoesäure-(4-cyan-3-fluorphenylester) und
5 % p-Propylbenzoesäure-(4-cyan-3-fluorphenylester)

hat eine Schwellenspannung von 1,00 Volt, eine optische Anisotropie von 0,17, einen Phasenübergang smektisch/nematisch < —20°, einen Schmelzpunkt von —6° and einen Klärpunkt von 62°.

Beispiel 7

Eine FK-Phase, bestehend aus

14 % 2-p-Cyanphenyl-5-propyl-1,3-dioxan,
18 % 2-p-Cyanphenyl-5-butyl-1,3-dioxan,
11 % 4-Ethyl-4'-cyanbiphenyl,
19 % 4-Butyl-4'-cyanbiphenyl,
6 % 4-Cyan-4'-(trans-4-pentylcyclohexyl)-biphenyl,
3 % p-(trans-4-Ethylcyclohexyl)-benzoesäure-(p-cyanphenylester),
3 % p-(trans-4-Pentylcyclohexyl)-benzoesäure-(p-cyanphenylester),
11 % p-(trans-4-Propylcyclohexyl)-benzoesäure-(4-cyan-3-fluorphenylester),
7 % p-Ethylbenzoesäure-(4-cyan-3-fluorphenylester) und
8 % p-Propylbenzoesäure-(4-cyan-3-fluorphenylester)

hat eine Schwellenspannung von 0,93 Volt, eine optische, Anisotropie von 0,17, einen Phasenübergang smektisch/nesmatisch < —20°, einen Schmelzpunkt von —5° und einen Klärpunkt von 61°.

Beispiel 8

Eine FK-Phase, bestehend aus

8 % 2-p-Cyanphenyl-5-ethyl-1,3-dioxan,
12 % 2-p-Cyanphenyl-5-propyl-1,3-dioxan,
17 % 2-p-Cyanphenyl-5-butyl-1,3-dioxan,
6 % 4,4'-Bis-(trans-4-propylcyclohexyl)-2-fluor-biphenyl,
6 % 4,4'-Bis-(trans-4-pentylcyclohexyl)-2-fluor-biphenyl,
6 % 4-(trans-4-pentylcyclohexyl)-4'-(trans-4-propylcyclohexyl)-2-fluor-biphenyl,
15 % 4-(trans-4-Propylcyclohexyl)-2-fluorbenzonitril,
10 % 4-(trans-4-Butylcyclohexyl)-2-fluorbenzonitril und
20 % 4-(trans-4-Pentylcyclohexyl)-2-fluorbenzonitril

hat eine Schwellenspannung von 1,3 Volt.

Beispiel 9

Eine FK-Phase, bestehend aus

14 % 2-p-Butoxyphenyl-5-propyl-1,3-dioxan,
15 % 2-p-Butoxyphenyl-5-pentyl-1,3-dioxan,
18 % 4-(trans-4-Propylcyclohexyl)-2-fluorbenzonitril,
15 % 4-(trans-4-Butylcyclohexyl)-2-fluorbenzonitril,
27 % 4-(trans-4-Pentylcyclohexyl)-2-fluorbenzonitril und
11 % trans-4-(trans-4-Pentylcyclohexyl)-1-(4-cyan-3-fluorphenyl)-cyclohexan

hat eine Schwellenspannung von 1,2 Volt.

Beispiel 10

Eine FK-Phase, bestehend aus

19 % p-trans-4-Propylcyclohexyl-benzonitril,
15 % 2-p-Butoxyphenyl-5-propyl-1,3-dioxan,
15 % 2-p-Butoxyphenyl-5-pentyl-1,3-dioxan,
11 % p-(5-Propyl-1,3-dioxan-2-yl)-benzoesäuren-(p-propylphenylester),
9 % p-(5-Propyl-1,3-dioxan-2-yl)-benzoesäuren-(p-pentylphenylester),
9 % p-(5-Pentyl-1,3-dioxan-2-yl)-benzoesäuren-(p-propylphenylester),
11 % 2-(4-Cyan-3-fluorphenyl)-5-propyl-1,3-dioxan und
11 % 2-(4-Cyan-3-fluorphenyl)-5-pentyl-1,3-dioxan

hat eine Schwellenspannung von 1,4 Volt.

Beispiel 11

Eine FK-Phase, bestehend aus

20 % p-trans-4-Propylcyclohexyl-benzonitril,
12 % 2-p-Cyanphenyl-5-propyl-1,3-dioxan,
14 % 2-p-Butoxyphenyl-5-propyl-1,3-dioxan,
13 % 2-p-Butoxyphenyl-5-pentyl-1,3-dioxan,
17 % 4-(trans-4-Propylcyclohexyl)-2-fluorbenzonitril,
8 % 2-(4-Cyan-3-fluorphenyl)-5-propyl-1,3-dioxan,
9 % 2-(4-Cyan-3-fluorphenyl)-5-(trans-4-propylcyclohexyl)-1,3-dioxan und
7 % 2-(4-Cyan-3-fluorphenyl)-5-(trans-4-pentylcyclohexyl)-1,3-dioxan

hat eine Schwellenspannung von 1,2 Volt.

Beispiel 12

Eine FK-Phase bestehend aus

13,5 % 2-p-Cyanphenyl-5-propyl-1,3-dioxan,
24,3 % trans-1-p-Ethylphenyl-4-propylcyclohexan,
9,0 % trans-1-p-Ethoxyphenyl-4-propylcyclohexan,
6,3 % 4-Cyan-4'-(trans-4-pentylcyclohexyl)-biphenyl,
8,1 % 4-Ethyl-4'-(trans-4-propylcyclohexyl)-biphenyl,
7,2 % 4-Ethyl-4'-(trans-4-pentylcyclohexyl)-biphenyl,
9,0 % 4-(trans-4-Pentylcyclohexyl)-4'-(trans-4-propylcyclohexyl)-biphenyl,
7,2 % p-trans-4-Propylcyclohexylbenzoesäure-(p-propylphenylester),
5,4 % p-trans-4-Pentylcyclohexylbenzoesäure-(p-propylphenylester und
10,0 % p-Propylbenzoesäure-(4-cyan-3-fluorphenylester)

hat einen Klärpunkt von 77°, bis — 20° keine smektische Phase, eine Viskosität von 23 (72 ; 383) mPa · s bei 20° (0° ; — 20°) und eine Schwellenspannung von 1,8 Volt.

Beispiel 13

Eine Flüssigkristallphase bestehend aus

18 % 2-p-Cyanphenyl-5-propyl-1,3-dioxan,
24 % 2-p-Cyanphenyl-5-butyl-1,3-dioxan,
30 % 4-(trans-4-Propylcyclohexyl)-phenylisothiocyanat,
10 % 4-(trans-4-Pentylcyclohexyl)-phenylisothiocyanat,
7 % p-trans-4-Ethylcyclohexylbenzoesäure-(p-cyanphenylester),
7 % p-trans-4-Pentylcyclohexylbenzoesäure-(p-cyanphenylester) und
4 % 4-(trans-4-Pentylcyclohexyl)-4'-(trans-4-propylcyclohexyl)-biphenyl

hat einen Klärpunkt von 64°, eine Viskosität von 28 mPa · s bei 20°, eine optische Anisotropie von 0,14 und eine Schwellenspannung von 1,5 Volt (2. Minimum nach Gooch-Tarry).

Beispiel 14

Eine Flüssigkristallphase bestehend aus

15 % 2-(trans-4-Cyancyclohexyl)-5-propyl-1,3-dioxan,
18 % 2-(trans-4-Cyancyclohexyl)-5-pentyl-1,3-dioxan,
12 % 2-(trans-4-Cyancyclohexyl)-5-heptyl-1,3-dioxan,
21 % 4-(trans-5-Pentyl-1,3-dioxan-2-yl)-phenylisothiocyanat,
6 % 4-(trans-5-Heptyl-1,3-dioxan-2-yl)-phenylisothiocyanat,
11 % p-trans-4-Propylcyclohexylbenzoesäure-(p-propylphenylester),
7 % p-trans-4-Propylcyclohexylbenzoesäure-(p-pentylphenylester) und
10 % p-trans-4-Pentylcyclohexylbenzoesäure-(p-propylphenylester)

hat einen Schmelzpunkt von 75°, eine Viskosität von 36 mPa · s bei 20°, eine optische Anisotropie von 0,11 und eine Schwellenspannung von 1,5 Volt (1. Minimum nach Gooch-Tarry).

Beispiel 15

Eine Flüssigkristallphase bestehend aus

19 % 4-(trans-5-Pentyl-1,3-dioxan-2-yl)-phenylisothiocyanat,

25 % 4-(trans-5-Heptyl-1,3-dioxan-2-yl)-phenylisothiocyanat,
4 % 4-(trans-4-Pentylcyclohexyl)-phenylisothiocyanat,
22 % 4-(trans-4-Propylcyclohexyl)-phenylisothiocyanat,
9 % 2-p-Cyanphenyl-5-propyl-1,3-dioxan,
9 % 2-p-Cyanphenyl-5-pentyl-1,3-dioxan,
5 % 4,4'-Bis-(trans-4-Propylcyclohexyl)-biphenyl und
7 % 4-(trans-4-Pentylcyclohexyl)-4'-(trans-4-propylcyclohexyl)-biphenyl

hat einen Klärpunkt von 63°, eine Viskosität von 23 mPa · s bei 20°, eine optische Anisotropie von 0,17 und eine Schwellenspannung von 1,4 Volt (2. Minimum).

Beispiel 16

Eine Flüssigkristallphase bestehend aus

12 % 2-(trans-4-Cyancyclohexyl)-5-butyl-1,3-dioxan,
8 % 2-(trans-4-Cyancyclohexyl)-5-pentyl-1,3-dioxan,
6 % 2-(p-Cyanphenyl)-5-butyl-1,3-dioxan,
5 % 2-(p-Cyanphenyl)-5-pentyl-1,3-dioxan,
11 % 2-(trans-4-Pentylcyclohexyl)-5-ethyl-1,3-dioxan,
12 % 4-(trans-4-Propylcyclohexyl)-phenylisothiocyanat,
10 % 4-(trans-5-Pentyl-1,3-dioxan-2-yl)-phenylisothiocyanat,
10 % p-trans-4-Propylcyclohexylbenzonitril,
10 % 4-Ethyl-4'-(trans-4-propylcyclohexyl)-biphenyl,
8 % 4-Ethyl-4'-(trans-4-pentylcyclohexyl)-biphenyl,
3 % 4,4'-Bis-(trans-4-Propylcyclohexyl)-biphenyl und
5 % 4-(trans-4-Pentylcyclohexyl)-4'-(trans-4-propylcyclohexyl)-biphenyl

hat einen Klärpunkt von 74°, eine Viskosität von 23 mPa · s bei 20°, eine optische Anisotropie von 0,12 und eine Schwellenspannung von 1,7 Volt (2. Minimum).

Beispiel 17

Eine Flüssigkristallphase bestehend aus

10 % p-trans-4-Ethylcyclohexylbenzonitril,
17 % p-trans-4-Propylcyclohexylbenzonitril,
9 % 2-p-Cyanphenyl-5-propyl-1,3-dioxan,
6 % 2-p-Cyanphenyl-5-butyl-1,3-dioxan,
5 % p-Ethylbenzoesäure-(4-cyan-3-fluorphenylester),
7 % p-Propylbenzoesäure-(4-cyan-3-fluorphenylester),
4 % p-trans-4-Ethylcyclohexylbenzoesäure-(p-cyanphenylester),
4 % p-trans-4-Pentylcyclohexylbenzoesäure-(p-cyanphenylester),
14 % trans, trans-4-Propoxy-4'-propylcyclohexylcyclohexan,
4 % 4-Ethyl-4'-(trans-4-propylcyclohexyl)-biphenyl,
3 % 4-Ethyl-4'-(trans-4-pentylcyclohexyl)-biphenyl,
3 % 4,4'-Bis-(trans-4-Propylcyclohexyl)-biphenyl,
4 % 4-(trans-4-Pentylcyclohexyl)-4'-(trans-4-propylcyclohexyl)-biphenyl,
5 % 4,4'-Bis-(trans-4-Propylcyclohexyl)-2-fluorbiphenyl und
5 % 4-(trans-4-Pentylcyclohexyl)-4'-(trans-4-propylcyclohexyl)-2-fluorbiphenyl

hat einen Klärpunkt von 84° und bis —30° keine smektische Phase.

Beispiel 18

Eine Flüssigkristallphase bestehend aus

10 % p-trans-4-Ethylcyclohexylbenzonitril,
17 % p-trans-4-Propylcyclohexylbenzonitril,
9 % 2-p-Cyanphenyl-5-propyl-1,3-dioxan,
6 % 2-p-Cyanphenyl-5-butyl-1,3-dioxan,
5 % p-Ethylbenzoesäure-(4-cyan-3-fluorphenylester),
7 % p-Propylbenzoesäure-(4-cyan-3-fluorphenylester),
4 % p-trans-4-Ethylcyclohexylbenzoesäure-(p-cyanphenylester),
4 % p-trans-4-Pentylcyclohexylbenzoesäure-(p-cyanphenylester),

14 % trans, trans-4-Propoxy-4'-propylcyclohexylcyclohexan,
5 % 4-Ethyl-4'-(trans-4-propylcyclohexyl)-biphenyl,
4 % 4-Ethyl-4'-(trans-4-pentylcyclohexyl)-biphenyl,
3 % 4,4'-Bis-(trans-4-Propylcyclohexyl)-biphenyl,
4 % 4-(trans-4-Pentylcyclohexyl)-4'-(trans-4-propylcyclohexyl)-biphenyl,
4 % 4,4'-Bis-(trans-4-Propylcyclohexyl)-2-fluorbiphenyl und
4 % 4-(trans-4-Pentylcyclohexyl)-4'-(trans-4-propylcyclohexyl)-2-fluorbiphenyl

hat einen Klärpunkt von 83°, bis —30° keine smektische Phase und eine Schwellenspannung von 1,36 Volt.

Beispiel 19

Eine Flüssigkristallphase bestehend aus

8 % 2-p-Cyanphenyl-5-ethyl-1,3-dioxan,
16 % 2-p-Cyanphenyl-5-propyl-1,3-dioxan,
18 % 2-p-Cyanphenyl-5-butyl-1,3-dioxan,
8 % 4-Ethyl-4'-cyanbiphenyl,
9 % 4-Butyl-4'-cyanbiphenyl,
6 % 4-p-Cyanphenyl-4'-pentylbiphenyl,
5 % p-trans-4-Ethylcyclohexylbenzoesäure-(p-cyanphenylester),
6 % p-trans-4-Pentylcyclohexylbenzoesäure-(p-cyanphenylester),
8 % p-Ethylbenzoesäure-(4-cyan-3-fluorphenylester),
9 % p-Propylbenzoesäure-(4-cyan-3-fluorphenylester) und
7 % p-(5-Heptylpyrimidin-2-yl)-benzoesäure-(4-cyan-3-fluorphenylester)

hat einen Klärpunkt von 64°, bis —20° keine smektische Phase und eine Schwellenspannung von 0,92 Volt.

Beispiel 20

Eine Flüssigkristallphase bestehend aus

8 % 2-p-Cyanphenyl-5-ethyl-1,3-dioxan,
16 % 2-p-Cyanphenyl-5-propyl-1,3-dioxan,
18 % 2-p-Cyanphenyl-5-butyl-1,3-dioxan,
8 % 4-Ethyl-4'-cyanbiphenyl,
9 % 4-Butyl-4'-cyanbiphenyl,
7 % 4-p-Cyanphenyl-4'-pentylbiphenyl,
5 % p-trans-4-Ethylcyclohexylbenzoesäure-(p-cyanphenylester),
7 % p-trans-4-Pentylcyclohexylbenzoesäure-(p-cyanphenylester),
8 % p-Ethylbenzoesäure-(4-cyan-3-fluorphenylester),
9 % p-Propylbenzoesäure-(4-cyan-3-fluorphenylester) und
5 % p-(5-Heptylpyrimidin-2-yl)-benzoesäure-(4-cyan-3-fluorphenylester)

hat einen Klärpunkt von 65°, vis —20° keine smektische Phase und eine Schwellenspannung von 0,91 Volt.

Beispiel 21

Eine Flüssigkristallphase bestehend aus

8 % 2-p-Cyanphenyl-5-ethyl-1,3-dioxan,
16 % 2-p-Cyanphenyl-5-propyl-1,3-dioxan,
18 % 2-p-Cyanphenyl-5-butyl-1,3-dioxan,
8 % 4-Ethyl-4'-cyanbiphenyl,
9 % 4-Butyl-4'-cyanbiphenyl,
7 % 4-p-Cyanphenyl-4'-pentylbiphenyl,
5 % p-trans-4-Ethylcyclohexylbenzoesäure-(p-cyanphenylester),
7 % p-trans-4-Pentylcyclohexylbenzoesäure-(p-cyanphenylester),
8 % p-Ethylbenzoesäure-(4-cyan-3-fluorphenylester),
9 % p-Propylbenzoesäure-(4-cyan-3-fluorphenylester) und
5 % p-(trans-5-Pentyl-1,3-dioxan-2-yl)-benzoesäure-(4-cyan-3-fluorphenylester)

hat einen Klärpunkt von 65°, bis — 20° keine smektische Phase und eine Schwellenspannung von 0,91 Volt.

Beispiel 22

Eine Flüssigkristallphase bestehend aus

8 % 2-p-Cyanphenyl-5-ethyl-1,3-dioxan,
16 % 2-p-Cyanphenyl-5-propyl-1,3-dioxan,
18 % 2-p-Cyanphenyl-5-butyl-1,3-dioxan,
8 % 4-Ethyl-4′-cyanbiphenyl,
9 % 4-Butyl-4′-cyanbiphenyl,
6 % 4-p-Cyanphenyl-4′-pentylbiphenyl,
5 % p-trans-4-Ethylcyclohexylbenzoesäure-(p-cyanphenylester),
5 % p-trans-4-Pentylcyclohexylbenzoesäure-(p-cyanphenylester),
8 % p-Ethylbenzoesäure-(4-cyan-3-fluorphenylester),
9 % p-Propylbenzoesäure-(4-cyan-3-fluorphenylester) und
8 % p-(trans-5-Pentyl-1,3-dioxan-2-yl)-benzoesäure-(4-cyan-3-fluorphenylester)

hat einen Klärpunkt von 64°, bis — 20° keine smektische Phase und eine Schwellenspannung von 0,86 Volt.

Beispiel 23

Eine Flüssigkristallphase bestehend aus

8 % 2-p-Cyanphenyl-5-ethyl-1,3-dioxan,
15 % 2-p-Cyanphenyl-5-propyl-1,3-dioxan,
16 % 2-p-Cyanphenyl-5-butyl-1,3-dioxan,
8 % 4-Ethyl-4′-cyanbiphenyl,
9 % 4-Butyl-4′-cyanbiphenyl,
6 % 4-Cyan-4′-(trans-4-pentylcyclohexyl)-biphenyl,
6 % 4-p-Cyanphenyl-4′-pentylbiphenyl,
5 % p-trans-4-Ethylcyclohexylbenzoesäure-(p-cyanphenylester),
5 % p-trans-4-Pentylcyclohexylbenzoesäure-(p-cyanphenylester),
8 % p-Ethylbenzoesäure-(4-cyan-3-fluorphenylester),
9 % p-Propylbenzosesäure-(4-cyan-3-fluorphenylester) und
5 % p-(trans-5-Pentyl-1,3-dioxan-2-yl)-benzoesäure-(4-cyan-3-fluorphenylester)

hat einen Klärpunkt von 71°, bis — 20° keine smektische Phase und eine Schwellenspannung von 0,95 Volt.

Beispiel 24

Eine Flüssigkristallphase bestehend aus

8 % 2-p-Cyanphenyl-5-ethyl-1,3-dioxan,
15 % 2-p-Cyanphenyl-5-propyl-1,3-dioxan,
16 % 2-p-Cyanphenyl-5-butyl-1,3-dioxan,
8 % 4-Ethyl-4′-cyanbiphenyl,
9 % 4-Butyl-4′-cyanbiphenyl,
6 % 4-Cyan-4′-(trans-4-pentylcyclohexyl)-biphenyl,
6 % 4-p-Cyanphenyl-4′-pentylbiphenyl,
5 % p-trans-4-Ethylcyclohexylbenzoesäure-(p-cyanphenylester),
5 % p-trans-4-Pentylcyclohexylbenzoesäure-(p-cyanphenylester),
8 % p-Ethylbenzoesäure-(4-cyan-3-fluorphenylester),
9 % p-Propylbenzoesäure-(4-cyan-3-fluorphenylester) und
5 % p-Hexyloxybenzoesäure-(4-cyan-3-fluorphenylester)

hat einen Klärpunkt von 65°, bis — 20° keine smektische Phase und eine Schwellenspannung von 0,90 Volt.

Beispiel 25

Eine Flüssigkristallphase bestehend aus

8 % 2-p-Cyanphenyl-5-ethyl-1,3-dioxan,
15 % 2-p-Cyanphenyl-5-propyl-1,3-dioxan,
15 % 2-p-Cyanphenyl-5-butyl-1,3-dioxan,
10 % 4-Ethyl-4'-cyanbiphenyl,
12 % 4-Butyl-4'-cyanbiphenyl,
7 % 4-Cyan-4'-(trans-4-pentylcyclohexyl)-biphenyl,
6 % 4-p-Cyanphenyl-4'-pentylbiphenyl,
5 % p-trans-4-Ethylcyclohexylbenzoesäure-(p-cyanphenylester),
5 % p-trans-4-Pentylcyclohexylbenzoesäure-(p-cyanphenylester),
8 % p-Ethylbenzoesäure-(4-cyan-3-fluorphenylester) und
9 % p-Propylbenzoesäure-(4-cyan-3-fluorphenylester)

hat einen Klärpunkt von 65°, bis —20° keine smektische Phase und eine Schwellenspannung von 0,98 Volt.

Beispiel 26

Eine Flüssigkristallphase bestehend aus

14 % 2-p-Cyanphenyl-5-propyl-1,3-dioxan,
18 % 2-p-Cyanphenyl-5-butyl-1,3-dioxan,
11 % 4-Ethyl-4'-cyanbiphenyl,
19 % 4-Butyl-4'-cyanbiphenyl,
6 % 4-Cyan-4'-(trans-4-pentylcyclohexyl)-biphenyl,
3 % p-trans-4-Ethylcyclohexylbenzoesäure-(p-cyanphenylester),
3 % p-trans-4-Pentylcyclohexylbenzoesäure-(p-cyanphenylester),
7 % p-Ethylbenzoesäure-(4-cyan-3-fluorphenylester),
8 % p-Propylbenzoesäure-(4-cyan-3-fluorphenylester und
11 % p-(trans-4-Propylcyclohexyl)-benzoesäure-(4-cyan-3-fluorphenylester)

hat einen Klärpunkt von 61°, bis —20° keine smektische Phase und eine Schwellenspannung von 0,93 Volt.

Alle in den Beispielen 1 bis 26 angegebenen FK-Phasen zeigen günstige Mesophasenbereiche und vorteilhafte elastische Eigenschaften.

**Patentansprüche**

1. Flüssigkristalline Phase, dadurch gekennzeichnet, daß sie mindestens eine Komponente der Formel I

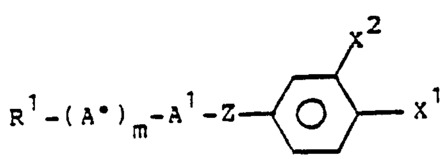

(I)

worin

$R^1$ Alkyl mit 1 bis 12 C-Atomen, worin auch eine oder zwei nicht benachbarte $CH_2$-Gruppen durch O-Atome, —CO—, —O—CO—, —CO—O— und/oder —CH=CH-Gruppen ersetzt sein können,
$A^0$ und $A^1$ jeweils unabhängig voneinander Cy, Dio, Pyr oder Phe,
Z —CO—O—, —O—CO—, —$CH_2$—O—, —O—$CH_2$— oder eine Einfachbindung,
$X^1$ F, Cl, —CN oder —NCS,
$X^2$ F, Cl und im Falle $X^1$ = NCS auch H,
m 0 oder 1,
Cy trans-1,4-Cyclohexylen,
Pyr Pyrimidin-2,5-diyl oder Pyridin-2,5-diyl,
Dio trans-1,3-Dioxan-2,5-diyl und
Phe 1,4-Phenylen bedeutet,

und mindestens eine Komponente der Formel II enthält

$$R^2\text{-Dio-}A^2\text{-}(Z\text{-}A^3)_n\text{-}R^3 \qquad (II)$$

worin

$R^2$ Alkyl mit 1 bis 12 C-Atomen, worin auch eine oder zwei nicht benachbarte $CH_2$-Gruppen durch O-

Atome, —CO—, —O—CO—, —CO—O— und/oder —CH=CH-Gruppen ersetzt sein können,

$R^3$ Alkyl mit 1 bis 12 C-Atomen, worin auch eine oder zwei nicht benachbarte $CH_2$-Gruppen durch O-Atome, —CO—, —O—CO—, —CO—O— und/oder —CH=CH-Gruppen ersetzt sein können, F, Cl oder CN,

$A^2$ und $A^3$ jeweils Phe oder Cy,

n 0, 1 oder 2 bedeutet, und

Z, Dio, Phe und Cy die angegebenen Bedeutungen haben.

2. Verwendung von flüssigkristallinen Phasen nach Anspruch 1 für elektrooptische Anzeigeelemente.

3. Elektrooptisches Anzeigeelement, dadurch gekennzeichnet, daß es eine Phase nach Anspruch 1 enthält.

**Claims**

1. Liquid crystal phase, characterized in that it contains at least one one component of the formula I

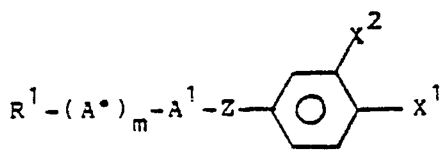

(I)

in which

$R^1$ is alkyl of 1 to 12 C atoms, in which in addition one or two non-adjacent $CH_2$ groups can be replaced by O atoms, —CO—, —O—CO—, —CO—O— and/or —CH=CH— groups,

$A^0$ and $A^1$ are each, independently of each other, Cy, Dio, Pyr or Phe,

Z is —CO—O—, —O—CO—, $CH_2$—O—, —O—$CH_2$— or a single bond,

$X^1$ is F, Cl, —CN or —NCS,

$X^2$ is F, Cl and in the case of $X^1$ = NCS also H,

m is 0 or 1,

Cy is trans-1,4-cyclohexylene,

Pyr is pyrimidine-2,5-diyl or pyridine-2,5-diyl,

Dio is trans-1,3-dioxane-2,5-diyl and

Phe is 1,4-phenylene,

and at least one component of the formula II

$$R^2\text{-Dio-}A^2\text{-}(Z\text{-}A^3)_n\text{-}R^3 \quad (II)$$

in which

$R^2$ is alkyl of 1 to 12 C atoms, in which in addition one or two non-adjacent $CH_2$ groups can be replaced by O atoms, —CO—, —O—CO—, —CO—O— and/or —CH=CH— groups,

$R^3$ is alkyl of 1 to 12 C atoms, in which in addition one or two non-adjacent $CH_2$ groups can be replaced by O atoms, —CO—, —O—CO—, —CO—O— and/or —CH=CH— groups, or is F, Cl or CN,

$A^2$ and $A^3$ are each Phe or Cy,

n is 0, 1 or 2 and

Z, Dio, Phe and Cy have the abovementioned meanings.

2. Use of liquid crystal phases according to Claim 1, for electro-optical display elements.

3. Electro-optical display element, characterized in that it contains a phase according to Claim 1.

**Revendications**

1. Phase à cristaux liquides caractérisée en ce qu'elle contient au moins un composant de formule I,

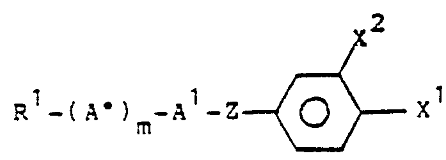

(I)

dans laquelle

$R^1$ représente un groupe alkyle en C1-C12 dans lequel un ou deux groupes $CH_2$ non voisins peuvent également être remplacés par des atomes d'oxygène, des groupes —CO—, —O—CO—, —CO—O— et/ou —CH=CH—,

$A^0$ et $A^1$ représentent chacun, indépendamment l'un de l'autre, Cy, Dio, Pyr ou Phe,
Z représente —CO—O—, —O—CO—, $—CH_2—O—$, $—O—CH_2—$ ou une liaison simple,
$X^1$ représente F, Cl, —CN ou —NCS,
$X^2$ représente F, Cl ou également, lorsque $X^1$ = NCS, H,
m est égal à 0 ou 1,
Cy représente un groupe trans-1,4-cyclohexylène,
Pyr représente un groupe pyrimidine-2,5-diyle ou pyridine-2,5-diyle,
Dio représente un groupe trans-1,3-dioxanne-2,5-diyle et
Phe représente un groupe 1,4-phénylène,

et au moins un composant de formule II

$$R^2\text{-Dio-}A^2\text{-}(Z\text{-}A^3)_n\text{-}R^3 \qquad (II)$$

dans laquelle

$R^2$ représente un groupe alkyle en C1-C12 dans lequel un ou deux groupes $CH_2$ non voisins peuvent également être remplacés par des atomes d'oxygène, des groupes —CO—, —O—CO—, —CO—O— et/ou —CH=CH—,

$R^3$ représente un groupe alkyle en C1-C12 dans lequel un ou deux groupes $CH_2$ non voisins peuvent également être remplacés par des atomes d'oxygène, des groupes —CO—, —O—CO—, —CO—O— et/ou —CH=CH—, ou bien F, Cl ou CN,

$A^2$ et $A^3$ représentent chacun Phe ou Cy,

n est égal à 0, 1 ou 2, et

Z, Dio, Phe et Cy ont les significations indiquées ci-dessus.

2. Utilisation de phases à cristaux liquides selon la revendication 1 pour des éléments d'affichage électro-optiques.

3. Elément d'affichage électro-optique caractérisé en ce qu'il contient une phase selon la revendication 1.